# EUROPÄISCHE PATENTSCHRIFT

(11) **EP 1 347 550 B1**
(45) Veröffentlichungstag und Bekanntmachung des Hinweises auf die Patenterteilung: **30.11.2005**
(21) Anmeldenummer: 03005654.3
(22) Anmeldetag: 13.03.2003
(51) Int. Cl.: H02G 3/12, H02G 3/04

(54) **Geräteeinbaukanal**
Apparatus mounting duct
Canal pour appareillages

(30) Priorität: 22.03.2002 DE 20204547 U
(43) Veröffentlichungstag der Anmeldung: 24.09.2003
(73) Patentinhaber: Tehalit GmbH, 67716 Heltersberg (DE)
(72) Erfinder: Kauf, Peter, 66482 Zweibrücken (DE); Schmitt, Erwin, 67659 Kaiserslautern (DE); Schneckmann, Horst, 67705 Trippstadt (DE)
(74) Vertreter: Patentanwälte Möll und Bitterich

(56) Entgegenhaltungen:
- DE-A- 3 916 825
- DE-A- 4 036 249
- US-B1- 6 350 135

## Beschreibung

Die Erfindung betrifft Geräteeinbaukanäle gemäß dem Oberbegriff des Anspruchs 1.

Geräteeinbaukanäle besitzen ein meist U- bzw. C-förmiges Kanalunterteil, das mit Hilfe eines lösbar aufrastbaren Deckels verschlossen werden kann. Im Kanalunterteil sind Vorrichtungen, üblicherweise in Form von Halteleisten, angebracht, an denen Elektroinstallationsgeräte lösbar fixiert werden können. Die Elektroinstallationsgeräte sind durch Ausschnitte im Deckel hindurch zugänglich.

Aus Gründen der elektrischen Sicherheit und der Elektromagnetischen Verträglichkeit (EMV-Richtlinien) müssen die Kanäle, die Deckel und die Elektroinstallationsgeräte mit einem elektrischen Potentialausgleich ausgerüstet werden. Dazu liefert die Industrie für Metallkanäle geeignete Klemmen, Klammern, Schrauben, Leitungen, Stecker, Federn usw.

Bei Elektroinstallationsgeräten für Starkstromanwendung wird der Potentialausgleich in einfachster Weise durch den mitgeführten Schutzleiter bewirkt. Schwachstromgeräte, insbesondere Geräte für die Hochfrequenz- und Datenübertragung, die mit Hilfe von geschirmten Kabeln bewirkt wird, werden über die Kabelschirmung kontaktiert. Dadurch kann es zu Spannungsverschleppungen kommen, was in jedem Fall unbefriedigend, unter Umständen sogar gefährlich ist.

Die DE-A-3 916 825 und DE-A-4 036 249 beschreiben einen derartigen geräteeinbaukanal.

Der vorliegenden Erfindung liegt daher die Aufgabe zugrunde, Geräteeinbaukanäle so zu modifizieren, dass auch über geschirmte Kabel gespeiste Elektroinstallationsgeräte problemlos verwendet werden können.

Diese Aufgabe wird gelöst durch einen Geräteeinbaukanal mit den Merkmalen des Anspruchs 1.

Die vorliegende Erfindung benutzt Elektroinstallationsgeräte, die ein geschirmtes Gehäuse besitzen, und verbindet das geschirmte Gehäuse mit den im Kanal vorhandenen Potentialausgleichsleitungen bzw. -anschlüssen. Dadurch ist sichergestellt, dass das elektrische Potential von Installationsgerät und Kanal identisch ist, so dass die elektrische Sicherheit in vollem Umfang gewährleistet ist. Die Abschirmung des Hochfrequenz- bzw. Datenübertragungskabels muss nur noch die Abschirmfunktion erfüllen. Von der Potentialausgleichsfunktion ist die Abschirmung somit völlig entlastet, zumal sie für diese Funktion üblicherweise auch völlig unterdimensioniert ist.

Gemäß einer vorteilhaften Ausgestaltung der Erfindung ist der Schirmungsanschluss am geschirmten Gehäuse des Elektroinstallationsgerätes ein Steckanschluss. Solche Steckanschlüsse in Form einer Steckzunge sind einfach herzustellen und beschleunigen die Montage der Potentialausgleichsleitung.

Anhand der Zeichnung soll die Erfindung in Form eines Ausführungsbeispiels näher erläutert werden. Es zeigen jeweils als Schrägansicht
- Fig. 1: ein Kanalunterteil mit eingesetzter Datensteckdose und
- Fig. 2: die Datensteckdose der Fig. 1.

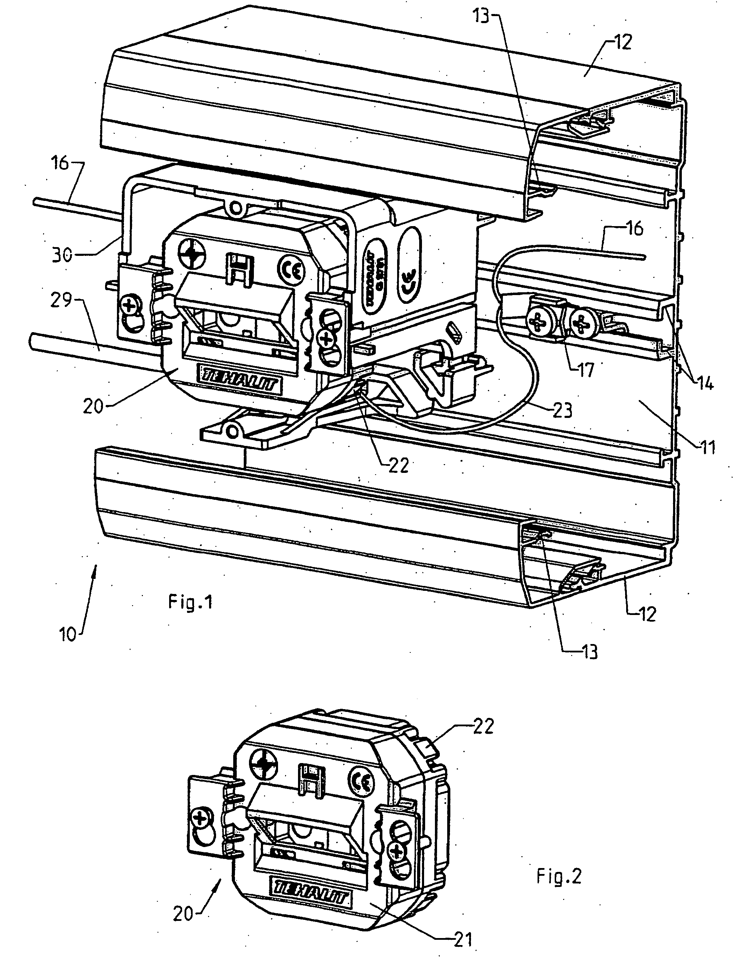

Fig. 1 zeigt ein Unterteil 10 eines Geräteeinbaukanals. Dieses hat einen C-förmigen Querschnitt und wird gebildet aus einem Boden 11, zwei Seitenwänden 12 und Deckelhalteprofilen 13 an den Seitenwänden 12. An der Innenseite des Bodens 11 sind parallele Halteleisten 14 angeformt.

An den Halteleisten 14 ist eine Geräteeinbaudose 30 montiert, in der als Beispiel für ein Elektroinstallationsgerät eine Datensteckdose 20 fixiert wurde. Zu der Datensteckdose 20 führt ein Datenkabel 29, welches aus Gründen der Störsicherheit eine Abschirmung besitzt.

Des weiteren erkennt man im Inneren des Kanalunterteils 10 Potentialausgleichsleitungen 16 sowie einen Potentialausgleichsanschluss 17, der die Verbindung zwischen der Potentialausgleichsleitung 16 und dem Kanalunterteil 10 herstellt.

Vom Potentialausgleichsanschluss 17 führt eine Potentialausgleichsleitung 23 zu der Datensteckdose 20.

Fig. 2 zeigt die Datensteckdose 20 der Fig. 1 in vergrößerter Darstellung. Man erkennt eine Gehäuseabschirmung 21, an der ein Steckanschluss 22 einstückig angeformt ist. Auf den Steckanschluss 22 kann ein handelsüblicher Stecker aufgeschoben werden.

## Patentansprüche

1. Geräteeinbaukanal, im wesentlichen umfassend
- ein Kanalunterteil (10) mit
-- einem Boden (11),
-- zwei Seitenwänden (12)
-- und Deckelhalteprofilen (13) an den Seitenwänden (12),
- einen Deckel, lösbar zu befestigen auf den Deckelhalteprofilen (13),
- elektrische Erdungs- und/oder Potentialausgleichsleitungen (16),
- Anschlüsse (17) an Kanalunterteil (10) und/oder Deckel für Erdung und Potentialausgleich
- und Elektroinstallationsgeräte (20), an die geschirmte Leitungen (29), insbesondere Daten- und Hochfrequenzleitungen, angeschlossen werden,
**gekennzeichnet durch** die Merkmale:
- die Elektroinstallationsgeräte (20) besitzen ein geschirmtes Gehäuse (21),
- das geschirmte Gehäuse (21) besitzt einen Schirmungsanschluss (22),
- eine Verbindungsleitung (23) verbindet das geschirmte Gehäuse (21) mit den Erdungs- und Potentialausgleichsleitungen (16) bzw. -anschlüssen (17) des Kanals.

2. Geräteeinbaukanal nach Anspruch 1, **gekennzeichnet durch** das Merkmal:
- der Schirmungsanschluss (22) ist ein Steckanschluss.

## Claims

1. Apparatus installation trunking, essentially comprising
- a trunking lower part (10) with
-- a bottom (11),
-- two side walls (12)
-- and cover retaining profiles (13) at the side walls (12),
- a cover, which is to be detachably fastened to the cover retaining profiles (13),
- electric earthing and/or equipotential bonding lines (16),
- connections (17) at the trunking lower part (10) and/or cover for earthing and equipotential bonding
- and electrical installation apparatus (20), to which shielded lines (29), in particular data and highfrequency lines, are connected,
**characterised by** the features:
- the electrical installation apparatus (20) have a shielded housing (21),
- the shielded housing (21) has a shielding connection (22),
- a connection line (23) connects the shielded housing (21) to the earthing and equipotential bonding lines (16) and/or connections (17) of the trunking.

2. Apparatus installation trunking according to Claim 1, **characterised by** the feature:
- the shielding connection (22) is a plug-in connection.

## Revendications

1. Conduit pour installations électriques, comprenant essentiellement
- une partie inférieure de canalisation ou de goulotte (10) avec
-- un fond (11),
-- deux parois latérales (12)
-- et des profilés de fixation de couvercle (13) sur les parois latérales (12),
- un couvercle amovible à fixer sur les profilés de fixation de couvercle (13),
- des lignes électriques de mise à la terre et/ou de compensation de potentiel (16),
- des raccords (17) sur la partie inférieure de canalisation ou de goulotte (10) et/ou le couvercle pour la mise à la terre et la compensation de potentiel,
- et des appareils d'installation électrique (20) auxquels sont raccordées des lignes blindées (29), en particulier des lignes de données et à haute fréquence,
**caractérisé par le fait que**
- les appareils d'installation électrique (20) possèdent un boîtier blindé (21),
- le boîtier blindé (21) possède un raccord de blindage (22),
- une ligne de liaison (23) relie le boîtier blindé (21) aux lignes de mise à la terre et de compensation de potentiel (16) ou aux raccords de mise à la terre et de compensation de potentiel (17) de la canalisation.

2. Conduit pour installations électriques selon la revendication 1, **caractérisé par le fait que**
- le raccord de blindage (22) est un raccord enfichable.
